# EUROPEAN PATENT SPECIFICATION

(11) **EP 1 069 981 B1**
(45) Date of publication and mention of the grant of the patent: **04.04.2012**
(21) Application number: 99900418.7
(22) Date of filing: 12.01.1999
(51) Int. Cl.: B29C 47/00, B29C 47/28, B29C 47/20

(54) **EXTRUDER HEAD MANDREL SPIDER**
STEGHALTERUNG FÜR EINEN STRANGPRESSDORN
ARAIGNEE POUR MANDRIN DE TETE D'EXTRUDEUSE

(30) Priority: 16.01.1998 CA 2227161; 04.03.1998 US 34241
(43) Date of publication of application: 24.01.2001
(60) Divisional application: 10182286.4
(73) Proprietor: Lupke, Manfred Arno Alfred, Thornhill Ontario L3T 1W6 (CA); Lupke, Stefan A., Thornhill, Ontario L3T 1X6 (CA)
(72) Inventor: Lupke, Manfred A., Ontario L3T 1W6 (CA); Lupke, Stefan A., Thornhill, Ontario L3T 1X6 (CA)
(74) Representative: Thum, Bernhard
(86) International application number: PCT/CA1999/000021
(87) International publication number: WO 1999/036247

(56) References cited:
- EP-A- 0 323 089
- DE-A- 1 940 195
- GB-A- 1 553 459
- US-A- 3 146 495
- US-A- 3 195 865
- US-A- 3 266 092
- US-A- 4 584 154
- US-A- 4 711 623
- US-A- 4 826 422
- US-A- 5 843 490
- PATENT ABSTRACTS OF JAPAN vol. 097, no. 002, 28 February 1997 & JP 08 281770 A (BANDO CHEM IND LTD), 29 October 1996
- PATENT ABSTRACTS OF JAPAN vol. 096, no. 007, 31 July 1996 & JP 08 080557 A (TOSOH CORP;SANYU TOKUSHU SEIKO KK), 26 March 1996

## Description

### FIELD OF THE INVENTION

The present invention relates to a spider in an extruder. In particular, the present invention relates to a spider having inner and outer rings.

Such a spider is known from GB 1,553,459.

### BACKGROUND OF THE INVENTION

A conventional mandrel of an extruder head used in extruding double wall plastic pipe is made of a plurality of concentric mandrel tubes which are centered and stabilized relative to one another through the use of a device known in the industry as a spider. The spider provides a spacer to allow the flow of plastic along the tubes past the spider.

The existing spider has spider legs which have an extended diamond shape generally symmetrical to the upstream and downstream sides of the widened center of the spider leg. The front edge of the diamond shape divides the flow of plastic along the mandrel to the spider such that the plastic flows as split streams around the center of the spider leg. The split streams gradually rejoin with one another after they pass the downstream end of the spider leg. The slower the streams rejoin and the less they intermingle with one another adversely affects the ability of the streams to bond to one another.

GB 1,553,459 describes an extruder die head for extruding articles of tubular profile from plastics material. The extruder die head has an annular space through which plastics material is received during production. It is suggested to arrange a plurality of deflecting blades in this annular space in order to achieve that separated streams of plastics material can be seamlessly combined.

It is an object of the present invention to provide an improved spider. For a preferred embodiment, it is desired that the spider has improved spider legs.

### SUMMARY OF THE INVENTION

A solution to this object is provided by the spider as mentioned at the outset, where the inner and outer rings are secured with one another by spider legs, wherein the spider legs are releasably attached to the inner and outer rings and are adapted to act as both spacers and connectors for the inner and outer rings.

In a preferred embodiment, each spider leg has upstream and downstream spider parts. The upstream part of the spider leg presents a flow splitter which splits flow of plastic to the spider leg into a plurality of independent plastic streams which then flow separately around the spider leg. The downstream part of the spider leg has a plurality of flow guides staggered at different radial depths in the spider leg. All of the flow guides are directed at one another to guide the independent plastic streams to bond with one another after they pass around the spider leg. The staggered positioning of the flow guides provides a very efficient bonding of the independent streams at the downstream end of the spider leg.

### BRIEF DESCRIPTION OF THE DRAWINGS

The above as well as other advantages and features of the present invention will be described in greater detail according to the preferred embodiments of the present invention in which;
Figure 1 is a sectional view through an extrusion die mandrel fitted with a spider;
Figure 2 is a sectional view along lines 2-2 of the spider of Figure 1, not according to the present invention,
Figure 3 is an outside view looking down onto one of the spider legs, not according to the present invention,
Figure 4 is a rear or downstream end view of the spider leg of Figure 3, not according to the present invention,
Figure 5 is a perspective view of the spider leg of Figure 4, not according to the present invention,
Figure 6 is a perspective view showing the general look of streams of plastic coming together at the downstream end of the spider leg of Figures 3 through 5, not according to the present invention,
Figure 7 is an end view of a spider according to a preferred embodiment of the invention;
Figure 8 is a side edge view of the spider of Figure 7;
Figures 9 and 10 are top and side views respectively of one of the spider legs from the spider of Figure 7.

### DETAILED DESCRIPTION ACCORDING TO THE PREFERRED EMBODIMENTS OF THE PRESENT INVENTION

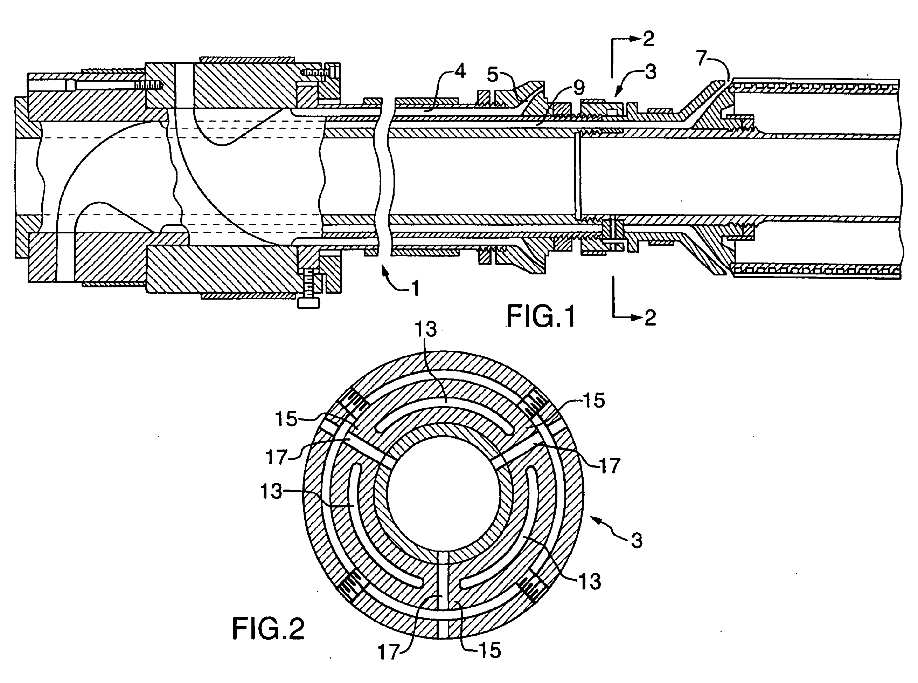

Figure 1 shows a mandrel generally indicated at 1 of an extruder head. This mandrel is formed of a plurality of concentric tubes as shown. These tubes are centered and stabilized relative to one another by means of a spider generally indicated at 3.

The extruder head mandrel is used for the molding of double wall plastic pipe. One of the walls is produced by a stream of plastic which flows along a plastic flow path 4 terminating in a mandrel orifice 5. As seen in Figure 1, this orifice is upstream of spider 3.

The mandrel further includes a second path 9 to flow plastic to a second orifice 7 which is downstream of spider 3. Plastic existing from orifice 7 is used to form an inner pipe wall.

The plastic flowing along path 9 must pass through the spider. Figure 2 shows that the spider is provided with a plurality of axially extending plastic flow paths 13 to allow the passage of the plastic through the spider to orifice 7. The flow paths are provided between the different diameter ring portions of the spider which are held together by spider legs 15.

As shown, the spider further includes passages 17 extending radially from the hollow center to the outside edge of the spider through the spider legs. These passages can be used for different purposes such as air and/or utility openings.

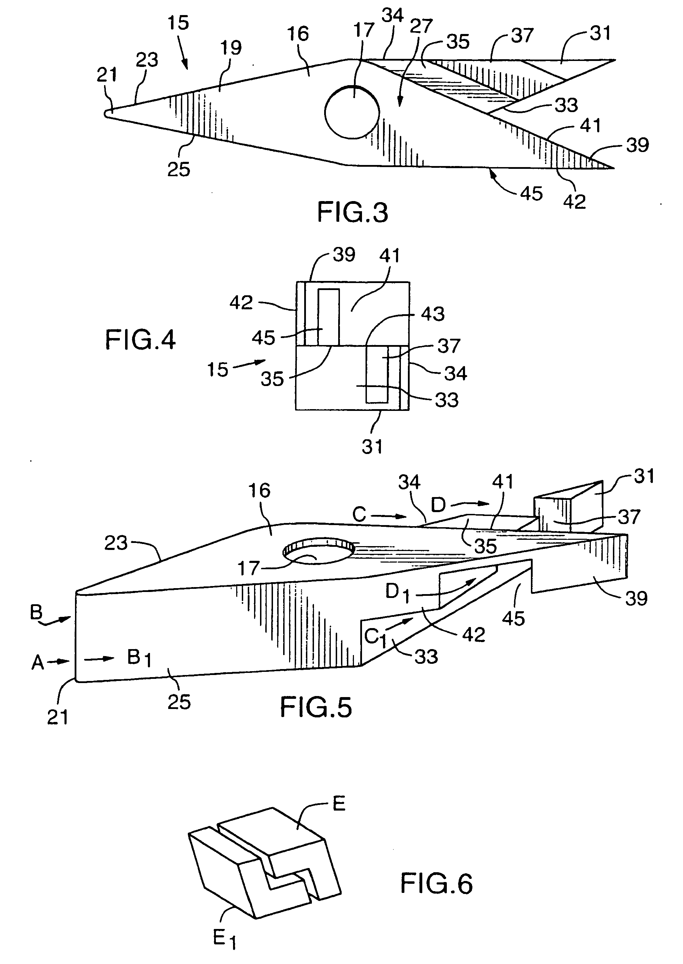

All of the spider legs are identical in construction and one of them is shown in Figures 3, 4 and 5 of the drawings. This spider leg comprises a first spider leg part generally indicated at 19 on the upstream side of the widened center portion 16 of the spider leg. The passage 17 is provided in portion 16. A second spider leg part generally indicated at 27 is provided downstream of spider portion 16.

Spider leg part 19 has a front apex 21 leading to side edge surfaces 23 and 25. The front apex divides plastic stream A which flows along flow path 9 of the mandrel to the spider. The plastic is split by apex 21 into a pair of independent plastic streams B and B1 which then are diverted from one another along the side edges 23 and 25 of the first or front part of the spider leg around air passage portion 16 of the spider leg.

The downstream part 27 of the spider leg is formed by a pair of leg portions 31 and 39. These two leg portions as shown are staggered, i.e. offset from one another and are located as seen in Figure 4 at different radial depths within the spider.

Leg portions 31 and 39 have been configured to cooperate with one another in acting as guides specifically to direct the flow of the first and second streams of plastic B and B1 at one another after these streams have passed around spider portion 16.

Leg portion 31 of the spider has a flat inside side edge surface 33 which is inclined across the longitudinal axis of the spider leg. Leg portion 31 is further provided with an outside edge surface 34, a face surface which is formed by a flat surface region 34 at right angles to edge surfaces 33 and 36 and further by a channel 37 which borders flat surface 35.

Leg portion 39 has an inside edge surface 41. This side edge surface of the second spider leg portion is inclined across the longitudinal axis of the spider leg in the opposite direction to the inclination of side edge surface 33 on the first spider leg portion 31.

Spider leg portion 39 further includes an outside edge surface 42 and its own face surface at generally right angles to its side edge surfaces 41 and 42. This face surface is defined by a flat surface region 43 and a channel 45 both of which are located radially inwardly of leg portion 39 the face surface of which is located radially outwardly of the side edge surface 33 of leg portion 31.

As earlier described, the plastic impacting the front end of the spider leg is divided into two streams of plastic B and B1 flowing along the edge surfaces 23 and 25 at the front of the spider leg. The first stream of plastic B is fed outwardly around spider portion 16 containing passage 17. Part of this stream is then redirected as stream C along the inside edge surface 41 of spider leg portion 39 across surface 35 of leg 31. The rest of stream B flows as stream D along outside edge surface 34 of leg 31 where it is collected in channel 37 which runs parallel to edge surface 41. Therefore channel 37 redirects stream D to flow together with stream C.

The second plastic stream B1 also flows around spider portion 16 where it divides into streams C1 and D1. Stream C1 flows along side edge 33 of leg portion 31 below stream C and directed at stream D flowing through channel 37. Stream D1 flows along side edge 42 of leg portion 39 where it collects in and is redirected by channel 45 at stream C.

As a result of all of the above, there is a substantial turbulence or breaking down of the original stream A into a host of smaller streams all of which are redirected at one another on the downstream end of the spider leg. This greatly enhances bonding of all of the streams to form a common stream required to form the inner wall of the pipe.

Figure 6 shows how the plastic generally flows at the downstream end of the spider leg. The two streams B and B1 reunite as steams E and E1 respectively. As will be seen in Figure 6, these two streams join in an overlapping welding of the two streams which provides a much better bonding than for example a standard butt welding as found with conventional spider legs.

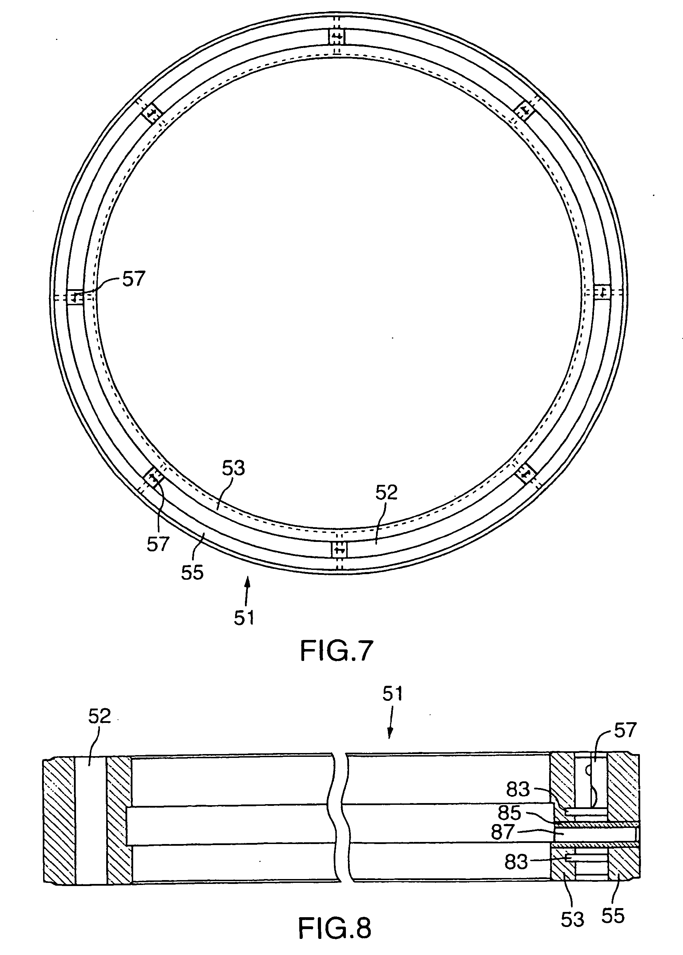

Figures 7 through 10 of the drawings show a preferred embodiment spider generally indicated art 51. This spider is again usable in an extruder and is particularly suited for use in an extruder head mandrel of a pipe forming apparatus used for making double walled pipe. The outer wall of the pipe exits the mandrel upstream of the spider and the inner wall of the pipe is formed by plastic which flows through axially extending flow passages 52 of spider 51.

In this embodiment, the entirety of the spider including its spider legs 57 has a novel construction. The spider itself is made from two separate and distinct rings namely inner ring 53 and outer ring 55 with the plastic flow passages 52 being provided between the two rings. Spider legs 57 act as both spacers and connectors for the two rings 53 and 55.

As opposed to a solid one piece construction, working with a multiple piece spider as shown in Figure 7, enables the interior and exterior ring to be finished separately from one another. It also enables separate finishing of the spider legs. Therefore, all exterior surfaces of all three parts are readily accessible for finishing purposes substantially enhancing the flow of plastic through the spider.

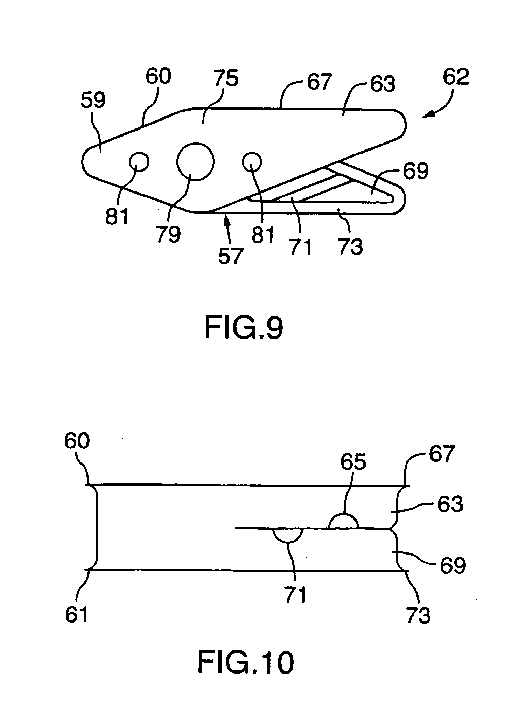

Figures 9 and 10 show one of the spider legs 57 from spider 51. It should be noted that all of the remaining spider legs have the same construction as that shown in Figures 9 and 10.

Spider leg 57 once again has a downstream end with radially staggered flow guides as earlier described with respect to spider leg 15. In this particular case, spider leg 57 has an upstream end 59 and a downstream end generally indicated at 62. The downstream end is formed by separate leg portions 63 and 69.

Spider leg 57 has a widened body portion 75 with a through passage 79 which provides access through the spider once again for different functions such as air and utilities. In this particular case, opening 79 is bordered to opposite sides by a further pair of smaller openings 81. These openings are used to receive dowel pins 83 shown in Figure 8 of the drawings to hold the two rings 53 and 55 together with one another. Figure 8 also shows a sleeve 85 fitted through the passage 75 in the spider leg. This sleeve is substantially taller than and projects both above and below the spider leg. In fact, sleeve 85 is sufficiently long that it projects through both the inner and outer spider rings to not only provide a passage 87 from the inside to the outside of the spider leg but to additionally stabilize the securing of the two rings relative to one another.

The mechanical fasteners described above, i.e. dowel pins 83 and sleeve 85 are accessible to release the spider legs from the spider rings. This enables dismantling of the spider which is very beneficial should one of the spider parts become damaged or otherwise require servicing. Only the affected part needs to be replaced rather than requiring an entire new spider as is the case with a conventional one piece spider.

Spider leg 57 has a number of additional features to enhance the flow of plastic around the spider leg. As will be clearly seen in Figures 9 and 10, the forward nose of the front splitter, the rear tips of the two spider leg portions 63 and 69 as well as the channels 65 and 71 at the downstream end of the spider leg have smooth rounded configurations. This substantially eliminates any plastic hang up regions along the spider leg. In addition, overhanging lips 60 and 61 are provided at the upper and lower edges at the forward nose 59 of the spider leg and these lips extend respectively as overhanging lip 67 on spider leg portion 63 and overhanging lip 73 on spider leg portion 69. Once again, there is a curved transition of the overhang lips to the main body portions of the spider leg. Accordingly these overhanging lips provide smooth guides for directing the flow of plastic onto the splitter and guides of the spider leg.

## Claims

1. Spider for an extrusion die, said spider (51) having separate inner and outer rings (53, 55), **characterized in that** said inner and outer rings (53, 55) are secured with one another by spider legs (57), wherein the spider legs (57) are releasably attached to said inner and outer rings (53, 55) and are adapted to act as both spacers and connectors for said inner and outer rings (53, 55).

2. Spider according to claim 1, **characterized by** mechanical securing means (83) at said spider legs (57) which holds said inner ring (53), outer ring (55) and spider legs (57) together with one another.

3. Spider according to claim 2, **characterized in that** said mechanical securing means (83) consists of dowel pins (83) and sleeve (85) and is accessible to release said spider legs (57) from said inner and outer rings (53, 55) for dismantling of said spider (51).

4. Spider according to claim 1, **characterized by** passages (79) extending radially from the hollow center to the outside edge of the spider (51) through said spider legs (57).

5. Spider according to claim 1, said spider (51) having a plurality of internal plastic flow passages (52) extending axially through said spider (51) and a spider leg (57) of said spider legs (57) between each flow passage (52), each spider leg (57) having an upstream part (59) and a downstream spider part (62) to opposite ends of said spider leg (57), said upstream part presenting a flow splitter which splits flow of plastic (A) to said spider leg (57) into a plurality of independent plastic streams (B1, B) around said spider leg (57), and said downstream part having a plurality of flow guides (31,39) staggered at different radial depths in said spider leg, all of said flow guides being directed to guide the independent plastic streams (B1, B) to bond with one another after flowing around the spider leg.

6. Spider according to claim 5, **characterized in that** said plurality of flow guides comprises first and second flow guides (31,39) which receive first and second independent streams of plastic (B1, B), said flow guides each having edge surfaces (33, 34, 41, 42) and face surfaces (35, 43), the edge surfaces of both guides being inclined across the axis of the spider leg (57) whereby the edge surface (33) of the first guide (31) directs the first stream of plastic (B1) across the face surface (43) of the second guide (39) and the edge surface (41) of the second guide (39) directs the second stream of plastic across the face surface (35) of the first guide (31) to produce an overlapped welding of the first and second independent streams of plastic (B1, B) with one another after passing around the spider leg (57) and to form a common stream of plastic downstream of the spider leg.

7. Spider according to claim 6, **characterized in that** the face surfaces (35, 43) of each guide (31, 39) comprises a flat surface region (35, 43) bordered by channels (37, 45) recessed in the face surface which provides a stepped configuration of plastic flow across each face surface to enhance the overlapped welding together of the first and second streams in forming the common stream of plastic.

8. Spider according to claim 7, wherein the channel (37) in the face surface (35) of the first guide (31) is parallel to the edge surface (41) of the second guide (39) and the channel (45) in the face surface (43) of the second guide (39) is parallel to the edge surface (33) of the first guide (31).

9. Spider according to claim 5, **characterized by** mechanical securing means (83) securing said spider legs (57) to said inner and outer rings (53, 55), said mechanical securing means (83) being releasable from said spider (3) for separation of said spider legs (57) from said inner and outer rings (53, 55).

10. Spider according to claim 5, **characterized in that** each spider leg (57) is bordered to opposite sides thereof by an overhanging lip (67, 73).

11. Spider according to claim 10, **characterized in that** each overhanging lip (67, 73) has a curved interior surface.

## Patentansprüche

1. Steghalter für eine Extruderdüse, wobei der Steghalter (51) einen seperaten Innen- und Außenring (53, 55) aufweist,
**dadurch gekennzeichnet, dass** der Innen- und Außenring (53, 55) durch Steghalterschenkel (57) aneinander befestigt sind, wobei die Steghalterschenkel (57) entfernbar am Innen- und Außenring (53, 55) angebracht und so eingerichtet sind, dass sie sowohl als Abstandshalter als auch als Verbindungselemente für den Innen- und Außenring (53, 55) wirken.

2. Steghalter nach Anspruch 1,
**gekennzeichnet durch** ein mechanisches Befestigungsmittel (83) an den Steghalterschenkeln (57), das den Innenring (53), den Außenring (55) und die Steghalterschenkel (57) zusammenhält.

3. Steghalter nach Anspruch 2,
**dadurch gekennzeichnet, dass** das mechanische Befestigungsmittel (83) Passstifte (83) und eine Hülse (85) aufweist und zugänglich ist, um die Steghalterschenkel (57) vom Innen- und Außenring (53, 55) zum Zerlegen des Steghalters (51) zu trennen.

4. Steghalter nach Anspruch 1,
**gekennzeichnet durch** Kanäle (79), die radial von der hohlen Mitte zur Außenkante des Steghalters (51) **durch** die Steghalterschenkel (57) verlaufen.

5. Steghalter nach Anspruch 1, wobei der Steghalter (51) eine Mehrzahl innerer Kanäle (52) für den Kunststoffstrom aufweist, die axial durch den Steghalter (51) verlaufen, und einen Steghalterschenkel (57) der Steghalterschenkel (57) zwischen jedem Strömungskanal (52), wobei jeder Steghalterschenkel (57) einen stromaufwärtigen Teil (59) und einem stromabwärtigen Teil (62) an gegenüberliegenden Enden des Steghalterschenkels (57) aufweist, wobei der stromaufwärtige Teil einen Strömungsteiler darstellt, der den Kunststoffstrom (A) zum Steghalterschenkel (57) in eine Mehrzahl unabhängiger Kunststoffströme (B1, B) um den Steghalterschenkel teilt, und der stromabwärtige Teil eine Mehrzahl Strömungsführungen (31, 39) aufweist, die versetzt an verschiedenen radialen Tiefen im Steghalterschenkel vorgesehen sind, wobei alle Strömungsführungen so ausgerichtet sind, dass sie die unabhängigen Kunststoffströme (B1, B) nach dem Umströmen des Steghalterschenkels zur Verbindung miteinander führen.

6. Steghalter nach Anspruch 5,
**dadurch gekennzeichnet, dass** die Mehrzahl Strömungsführungen (31, 39) erste und zweite Strömungsführungen (31, 39) aufweist, die erste und zweite unabhängige Kunststoffströme (B1, B) führen, wobei die Strömungsführungen jeweils Kantenflächen (33, 34, 41, 42) und Stirnflächen (35, 43) aufweisen, wobei die Kantenflächen an beiden Führungen über die Achse des Steghalterschenkels (57) geneigt sind, wodurch die Kantenfläche (33) der ersten Führung (31) den ersten Kunststoffstrom (B1) über die Stirnfläche (43) der zweiten Führung (39) führt, und die Kantenfläche (41) der zweiten Führung (39) den zweiten Kunststoffstrom über die Stirnfläche (35) der ersten Führung (31) führt, um eine überlappende Vereinigung des ersten und zweiten unabhängigen Kunststoffstroms (B1, B) nach dem Umströmen des Steghalterschenkels (57) zu erhalten und einen gemeinsamen Kunststoffstrom nach dem Steghalterschenkel zu bilden.

7. Steghalter nach Anspruch 6,
**dadurch gekennzeichnet, dass** die Stirnflächen (35, 43) jeder Führung (31, 39) eine ebene Oberflächenzone (35, 43) aufweisen, die durch in die Stirnfläche versenkte Kanäle (37, 45) begrenzt wird, wodurch eine gestufte Konfiguration des Kunststoffstroms über jede Stirnfläche erreicht wird, um die überlappende Vereinigung des ersten und zweiten Stroms bei der Bildung des gemeinsamen Kunststoffstroms zu verbessern.

8. Steghalter nach Anspruch 7, bei dem der Kanal (37) in der Stirnfläche (35) der ersten Führung (31) parallel zur Kantenfläche (41) der zweiten Führung (39) und der Kanal (45) in der Stirnfläche (43) der zweiten Führung (39) parallel zur Kantenfläche (33) der ersten Führung (31) verläuft.

9. Steghalter nach Anspruch 5,
**gekennzeichnet durch** ein mechanisches Befestigungsmittel (83), das die Steghalterschenkel (57) am Innen- und Außenring (53, 55) befestigt, wobei das mechanische Befestigungsmittel (83) aus dem Steghalter (3) entfernt werden kann, um die Steghalterschenkel (57) vom Innen- und Außenring (53, 55) zu trennen.

10. Steghalter nach Anspruch 5,
**dadurch gekennzeichnet, dass** die gegenüberliegenden Seiten jedes Steghalterschenkels (57) jeweils durch eine überhängende Lippe (67, 73) begrenzt sind.

11. Steghalter nach Anspruch 10,
**dadurch gekennzeichnet, dass** jede überhängende Lippe (67, 73) eine gekrümmte Innenoberfläche aufweist.

## Revendications

1. Araignée pour une filière d'extrusion, ladite araignée (51) ayant des bagues intérieure et extérieure (53, 55) séparées, **caractérisée en ce que** lesdites bagues intérieure et extérieure (53, 55) sont fixées l'une avec l'autre par des pattes d'araignée (57), dans laquelle les pattes d'araignée (57) sont fixées de façon libérable auxdites bagues intérieure et extérieure (53, 55) et sont adaptées à agir à la fois comme espaceurs et comme connecteurs pour lesdites bagues intérieure et extérieure (53, 55).

2. Araignée selon la revendication 1, **caractérisée par** un moyen de fixation mécanique (83) au niveau desdites pattes d'araignée (57) qui maintient lesdites bague intérieure (53), bague extérieure (55) et pattes d'araignée (57) les unes avec les autres.

3. Araignée selon la revendication 2, **caractérisée en ce que** ledit moyen de fixation mécanique (83) consiste en des goupilles de positionnement (83) et un manchon (85) et est accessible pour libérer lesdites pattes d'araignée (57) desdites bagues intérieure et extérieure (53, 55) pour démonter ladite araignée (51).

4. Araignée selon la revendication 1, **caractérisée par** des passages (79) s'étendant radialement du centre creux jusqu'au bord extérieur de l'araignée (51) à travers lesdites pattes d'araignée (57).

5. Araignée selon la revendication 1, ladite araignée (51) ayant une pluralité de passages internes d'écoulement de plastique (52) s'étendant axialement à travers ladite araignée (51) et une patte d'araignée (57) parmi lesdites pattes d'araignée (57) entre chaque passage d'écoulement (52), chaque patte d'araignée (57) ayant une partie amont (59) et une partie aval (62) d'araignée au niveau d'extrémités opposées de ladite patte d'araignée (57), ladite partie amont présentant un séparateur d'écoulement qui sépare un écoulement de plastique (A) jusqu'à ladite patte d'araignée (57) en une pluralité de courants de plastique (B1, B) indépendants autour de ladite patte d'araignée (57), et ladite partie aval ayant une pluralité de guides d'écoulement (31, 39) empilés à différentes profondeurs radiales dans patte d'araignée, la totalité desdits guides d'écoulement étant dirigés de façon à guider les courants de plastique (B1, B) indépendants pour les lier les uns avec les autres après écoulement autour de la patte d'araignée.

6. Araignée selon la revendication 5, **caractérisée en ce que** ladite pluralité de guides d'écoulement comprend un premier et un deuxième guides d'écoulement (31, 39) qui reçoivent un premier et un deuxième courants de plastique (B1, B) indépendants, lesdits guides d'écoulement ayant chacun des surfaces de bord (33, 34, 41, 42) et des surfaces de face (35, 43), les surfaces de bord des deux guides étant inclinées au travers de l'axe de la patte d'araignée (57), d'où il résulte que la surface de bord (33) du premier guide (31) dirige le premier courant de plastique (B1) au travers de la surface de face (43) du deuxième guide (39) et la surface de bord (41) du deuxième guide (39) dirige le deuxième courant de plastique au travers de la surface de face (35) du premier guide (31) pour produire une soudure en chevauchement du premier et du deuxième courants de plastique (B1, B) indépendants l'un avec l'autre après passage autour de la patte d'araignée (57) et pour former un courant commun de plastique en aval de la patte d'araignée.

7. Araignée selon la revendication 6, **caractérisée en ce que** les surfaces de face (35, 43) de chaque guide (31, 39) comprennent une région de surface plate (35, 43) bordée par des canaux (37, 45) en renfoncement dans la surface de face qui offre une configuration en marches d'écoulement de plastique au travers de chaque surface de face pour améliorer la soudure en chevauchement ensemble du premier et du deuxième courants lors de la formation du courant commun de plastique.

8. Araignée selon la revendication 7, dans laquelle le canal (37) dans la surface de face (35) du premier guide (31) est parallèle à la surface de bord (41) du deuxième guide (39) et le canal (45) dans la surface de face (43) du deuxième guide (39) est parallèle à la surface de bord (33) du premier guide (31).

9. Araignée selon la revendication 5, **caractérisée par** un moyen d'immobilisation mécanique (83) immobilisant lesdites pattes d'araignée (57) sur lesdites bagues intérieure et extérieure (53, 55), ledit moyen d'immobilisation mécanique (83) étant libérable de ladite araignée (3) pour une séparation desdites pattes d'araignée (57) desdites bagues intérieure et extérieure (53, 55).

10. Araignée selon la revendication 5, **caractérisée en ce que** chaque patte d'araignée (57) est bordée sur des côtés opposés de celle-ci par une lèvre en porte-à-faux (67, 73).

11. Araignée selon la revendication 10, **caractérisée en ce que** chaque lèvre en porte-à-faux (67, 73) a une surface intérieure incurvée.
